# EUROPEAN PATENT SPECIFICATION

(11) **EP 3 712 498 B1**
(45) Date of publication and mention of the grant of the patent: **16.02.2022**
(21) Application number: 19163661.2
(22) Date of filing: 19.03.2019
(51) Int. Cl.: F23J 15/00, F23J 15/02, F23J 15/06, F22G 5/04, F22B 35/00

(54) **METHOD OF OPERATING AN INCINERATION PLANT FOR SOLID MATERIAL**
VERFAHREN ZUM BETRIEB EINER VERBRENNUNGSANLAGE FÜR FESTMATERIAL
PROCÉDÉ D'OPERATION D'UNE INSTALLATION D'INCINÉRATION DE MATIÈRES SOLIDES

(43) Date of publication of application: 23.09.2020
(73) Proprietor: Doosan Lentjes GmbH, 40880 Ratingen (DE)
(72) Inventor: KRÜLL, Ferdinand, 40470 Düsseldorf (DE); KARPINSKI, Andreas, 44285 Wuppertal (DE)
(74) Representative: Feucker, Max Martin

(56) References cited:
- EP-A1- 0 806 236
- EP-A1- 0 884 526
- EP-A2- 1 990 574
- US-A- 4 160 009

## Description

The present invention relates to a method of operating an incineration plant for solid material such as waste or biomass, the incineration plant having a combustion material inlet through which the solid material is to be introduced, a combustion chamber into which the solid material is introduced and in which the solid material is combusted, whereby flue gases are produced, at least one empty pass downstream of the combustion chamber, a heat recovery steam generator (pass) downstream of the empty pass and a flue gas purification device (pass) downstream of the heat recovery steam generator.

The incineration plant usually comprises a combustion grate arranged within a lower section of the combustion chamber with which the solid material and combusted solid material can be conveyed through the combustion chamber from the combustion material inlet to a slag container. Primary air is usually supplied from below the combustion grate to the solid material arranged on the combustion grate, so that the solid material arranged on the combustion grate is combusted with the primary air.

Additionally, nozzles may be provided above the combustion grate with which secondary air, tertiary air for afterburning and/or an oxygen poor carrier gas can be provided to the flue gases.

The at least one empty pass may be arranged vertically or horizontally, wherein the flue gases flow from the combustion chamber through the at least one empty pass to the heat recovery steam generator. In particular, two, three or more parallel empty passes may be embodied.

The heat recovery steam generator may be arranged (in sections) vertically and/or horizontally, wherein also an oblique orientation is possible.

The walls of the combustion chamber and the empty pass(es) are usually equipped with heat exchangers (i.e. tubes), wherein the heat exchange medium of the heat exchangers is in particular provided to one common boiler drum.

The flue gas purification device may comprise elements for dedusting, scrubbing and desulfurization (such as SCR or SNCR) of the flue gas. A chimney may by arranged downstream of the flue gas purification device.

The heat recovery steam generator comprises heat exchangers (i.e. tubes), which come into (thermal) contact with the flue gases, wherein a heat exchange medium (i.e. water or steam) provided through the heat exchangers transfers the exchanged heat to a boiler drum or similar.

During operation of such an incineration plant, contaminations in the flue gas deposit within the heat recovery steam generator on the heat exchangers or on the inner walls of the heat recovery steam generator, whereby the heat transfer efficiency from the flue gas to the heat transfer medium is reduced. In order to remove such depositions in the heat recovery steam generator the whole incineration plant has to be run down, the heat recovery system generator needs to be cooled down and then the depositions can be removed manually. Afterwards it takes a relatively long time to run the incineration plant to full load. Accordingly, there is a long downtime of the incineration plant for cleaning the heat recovery steam generator.

EP 0 806 236 A1, which the two-part-form of claim 1 is based on, discloses an incineration plant which has a gas flow diverter ahead of two waste gas lines in order to control the waste gas temperature for a subsequent denox reactor. Further incineration plants are disclosed in EP 1 990 574 A2, US 4 160 009 A and EP 0 884 526 A1.

In view of this, it is an object of the present invention to provide a method for operating an incineration plant which heat recovery system generator can be cleaned without the need to shut down the whole incineration plant.

This object is achieved by a method for operating the incineration plant with the features of the independent claim. Preferred embodiments of the invention are described in the sub claims and in the whole description, wherein single features of the preferred embodiments can be combined with each other in a technically meaningful manner.

The object is achieved in particular in that the heat recovery steam generator has a first heat recovery flow path and at least one, in particular one, two or even three second heat recovery flow path(s), each heat recovery flow path connecting the empty pass to the flue gas purification device, wherein at least one inflow shut off device is provided, so that a flue gas flow into each heat recovery pass is interruptible individually. In particular, one inflow shut off device is assigned to each heat recovery flow path.

With other words, the present invention suggests to provide the heat recovery steam generator with two fluidically parallel heat recovery flow paths, wherein each heat recovery flow path can be disconnected from the flue gas flow. This way the disconnected (closed) heat recovery flow path can be cleaned during operation of the incineration plant, wherein the flue gas is conducted through the open heat recovery flow path(s).

It is in particular suggested to operate the incineration plant with a method comprising the following steps:
- Combusting solid material (i.e. waste or biomass) in the combustion chamber with a first rate,
- Reducing the combustion of the solid material in the combustion chamber to a second rate, for example the second rate being no more than 60% of the maximum combustion rate or preferable no more than 50% or 40% of the maximum combustion rate,
- Closing at least one inflow shut off device for the first heat recovery flow path, so that the flow of flue gas into the closed first heat recovery flow path is interrupted.
- Manually cleaning and/or manually maintaining the closed first heat recovery flow path, for example with a manually operated high pressure water blaster, while solid material is combusted at the second rate and at least one non-closed second heat recovery flow path is flown through by flue gas.

According to the invention it is not necessary to shut down the incineration plant in order to clean and/or maintain the heat recovery flow path of the heat recovery steam generator.

In particular it is suggested that during maintenance of the interrupted heat recovery flow path an overpressure of ambient air is provided in the interrupted heat recovery flow path, so that no flue gas may enter the interrupted heat recovery flow path.

In one embodiment, also the at least one empty pass may comprise one first empty flow path and at least one second empty flow path, wherein each empty flow path connects the combustion chamber or one common upstream empty pass to one heat recovery flow path. Accordingly, according to this embodiment the at least one empty pass has at least two fluidically parallel empty flow paths, each of which conduct the flue gas to a respective heat recovery flow path. In this embodiment the number of the empty flow paths may be the same as the number of heat recovery flow paths. Of course, the at least one empty pass may have only one single path, through which the flue gas is conducted to the multiple heat recovery flow paths.

In an even further embodiment, also the flue gas purification device may comprise a first flue gas purification flow path and at least one second flue gas purification flow path, wherein each flue gas purification flow path is assigned to a respective heat recovery flow path. Accordingly, in this embodiment the number of the flue gas purification flow paths may be the same as the number of heat recovery flow paths. Of course, the flue gas purification device may have only one single path, into which the flue gas from the multiple heat recovery flow paths is conducted.

The at least one inflow shut off device is arranged in such a manner that the flue gas flow into each heat recovery flow path can be interrupted individually. For example, in case the empty pass comprises multiple parallel paths, the inflow shut off device may be arranged at the upstream side or within the respective empty flow path. Preferable, one inflow shut off device is assigned to each heat recovery flow path, wherein the inflow shut off device is in particular arranged between the single path or multiple paths of the empty pass and the respective heat recovery flow path.

In a further embodiment, an outflow shut off device is assigned to each heat recovery flow path, wherein preferably one outflow shut off device is assigned to each heat recovery flow path and is preferably arranged between the heat recovery steam generator and the downstream flue gas purification device. In case that also the heat recovery steam generator is embodied with multiple paths, the outflow shut off device may be arranged at the downstream end of the respective flue gas purification flow path. This way it can be avoided that during maintenance of the interrupted heat recovery flow path flue gases enter into the respective heat recovery flow path.

The at least one (inflow and/or outflow) shut off device may be embodied as linearly movable flue gas blade or as pivotable flue gas flap. In case the shut off device is embodied as linearly movable flue gas blade the blade may be entered from the bottom, the side or the top (guillotine damper) into the respective flow path. If the shut off device is embodied as pivotable flue gas flap the flap is arranged at the top, bottom or side in its initial state and can be pivoted in particular about a horizontal or vertical pivot axis into the respective flow path.

In one embodiment, the heat recovery flow paths extend also geometrically parallel to each other and are arranged with a distance to each other, so that the heat recovery flow paths do not have a common wall. This way, the heat transfer from one heat recovery flow path to a neighboring heat recovery flow path is reduced. In particular, a thermal insulating material may be arranged between the outer walls of two neighboring heat recovery flow paths. Preferably, each heat recovery flow path comprises a superheater heat exchanger, an evaporator heat exchanger and an economizer heat exchanger which can be operated independently from respective heat exchangers of the parallel heat recovery flow paths. Accordingly, the heat transfer medium supplied to a heat exchanger of the first heat recovery flow path is not directly provided to a respective heat exchanger of the second heat recovery flow path.

In an embodiment, the heat exchangers arranged in the heat recovery flow paths are connected to one common boiler drum, so that the one boiler drum can be operated at any time, independently of which heat recovery flow path is interrupted.

Each heat recovery flow path may comprise a separate door to enter the respective heat recovery flow path, when the respective heat recovery flow path is disconnected from the flue gas stream. This way the heat recovery flow paths are accessible independently of each other for the maintenance personal.

The incineration plant may comprise multiple (two, three or more) parallel incineration plant lines, each incineration plant line comprising one combustion chamber with a combustion material inlet, at least one empty pass and a heat recovery steam generator according to the invention, wherein each incineration plant line may comprise one flue gas purification device or wherein two or more incineration plant lines are connected to one (common) flue gas purification device.

The invention and the technical background will now be explained with regard to the figures, which show an exemplary embodiment of the invention.

The figures show schematically
- Figure 1:: a side view of a part of an incineration plant and
- Figure 2:: a perspective view of a heat recovery steam generator of the incineration plant shown in figure 1.

The incineration plant comprises a combustion chamber 2 with a combustion material inlet 1, through which solid combustion material such as waste can be introduced in the combustion chamber 2. At the bottom of the combustion chamber 2 a combustion grate 3 is embodied, with which the solid material and combusted material (ashes) can be transported towards a slag outlet 4. The flue gases produced in the combustion chamber 2 are supplied into vertically extending empty passes 5. Downstream of the empty passes 5 a horizontally extending heat recovery steam generator 6 is arranged.

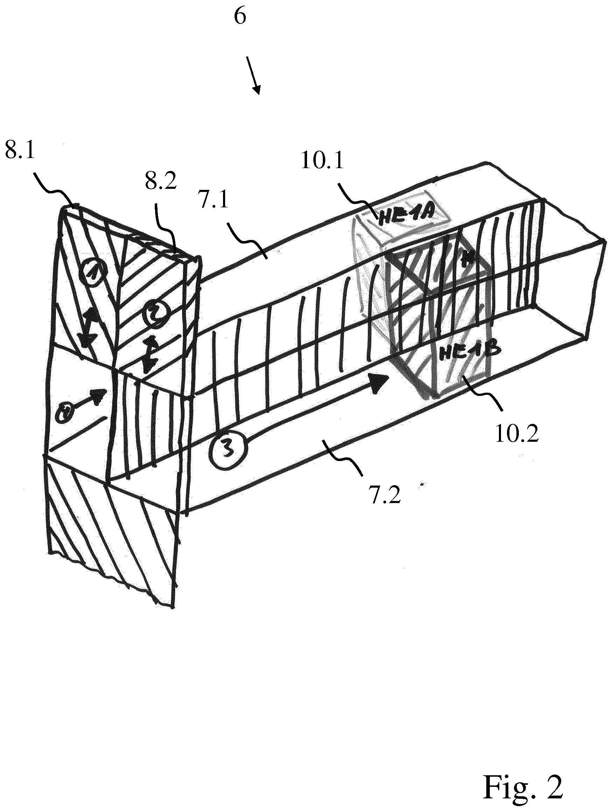

As can be seen from the perspective view of figure 2 the heat recovery steam generator 6 comprises a first heat recovery flow path 7.1 and a parallelly extending second heat recovery flow path 7.2. At the inlet to the first heat recovery flow path 7.1 a first inflow shut off device 8.1 embodied as guillotine damper is arranged, while a second inflow shut off device 8.2 is arranged at the inlet of the second heat recovery flow path 7.2.

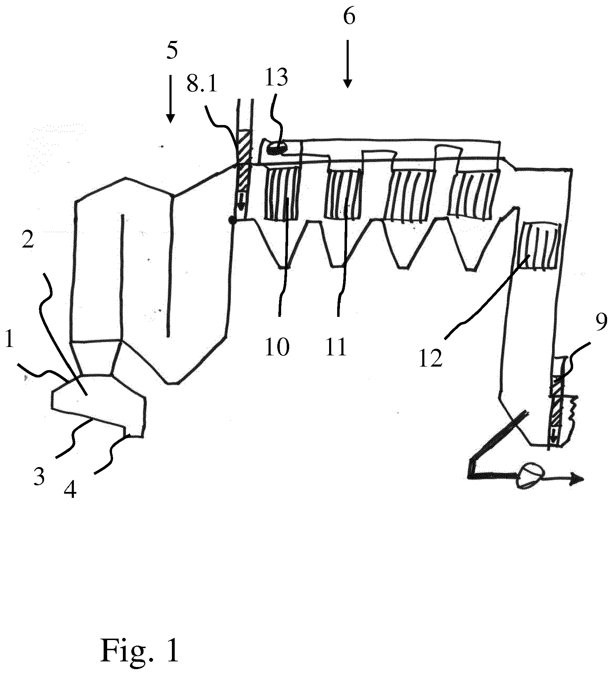

In the first heat recovery flow path 7.1 a first superheater heat exchanger 10.1 and in the second heat recovery flow path 7.2 a second superheater heat exchanger 10.2 is arranged. As only indicated in figure 1, in each of the heat recovery flow paths 7.1 and 7.2 an evaporator heat exchanger 11 and an economizer heat exchanger 12 are additionally arranged, which are all connected to one common boiler drum 13.

At the outlet of each heat recovery flow paths 7.1 and 7.2 an outflow shut off device 9 is arranged.

In case the internal elements (such as heat exchangers or walls) of the heat recovery flow paths 7.1 and 7.2 need to be cleaned, the combustion rate of solid material is reduced and one of the inflow shut off devices 8.1 and 8.2 is closed, so that the flue gas is completely conducted through the open heat recovery flow path.

After the closed heat recovery flow path is cooled down, an overpressure of ambient air is applied to the respective heat recovery flow path, so that cleaning staff can enter the respective heat recovery flow path and can clean the respective components, while the incineration plant is still operating. Thereby it is avoided that the whole incineration plant needs to be shut down in order to clean the heat recovery steam generator 6.

### Reference sings

- 1: combustion material inlet
- 2: combustion chamber
- 3: combustion grate
- 4: slag outlet
- 5: empty pass
- 6: heat recovery steam generator
- 7.1: fist heat recovery flow path
- 7.2: second heat recovery flow path
- 8.1: first inflow shut off device
- 8.2: second inflow shut off device
- 9: outflow shut off device
- 10, 10.1, 10.2: superheater heat exchanger
- 11: evaporator heat exchanger
- 12: economizer heat exchanger
- 13: boiler drum

## Claims

1. Method of operating an incineration plant for solid material having
- a combustion material inlet (1) through which solid material is to be introduced,
- a combustion chamber (2) in which the solid material is introduced and in which the solid material is combusted, whereby flue gases are produced,
- at least one empty pass (5) downstream of the combustion chamber (2),
- a heat recovery steam generator (6) downstream of the empty pass (5) and
- a flue gas purification device downstream of the heat recovery steam generator (6),
wherein
the heat recovery steam generator (6) has a first heat recovery flow path (7.1) and at least one second heat recovery flow path (7.2), each heat recovery flow path (7.1, 7.2) connecting the empty pass (5) to the flue gas purification device, wherein at least one inflow shut off device (8.1, 8.2) is provided, so that flue gas flow into each heat recovery flow path (7.1, 7.2) is interruptible individually, the method comprising the following steps:
- Combusting solid material in the combustion chamber (2) with a first rate,
- Reducing the combustion of solid material in the combustion chamber (2) to a second rate,
- Closing at least one inflow shut off device (8.1) for the first heat recovery flow path (7.1), so that the flow of flue gas into the closed first heat recovery flow path (7.1) is interrupted,
the method **characterised in**
- Manually cleaning and/or manually maintaining the closed first heat recovery flow path (7.1), while solid material is combusted at the second rate and at least one non-closed second heat recovery flow path (7.2) is flown through by flue gas.

2. Method according to claim 1, wherein for each heat recovery flow path an inflow shut off device (8.1, 8.2) is arranged between the empty pass (5) and the respective heat recovery flow path (7.1, 7.2).

3. Method according to claim 2, wherein an outflow shut off device (9) is arranged between the respective heat recovery flow path (7.1, 7.2) and the flue gas purification device

4. Method according to one of the preceding claims, wherein the shut off device (8.1, 8.2, 9) is embodied as linearly movable flue gas blade or as pivotable flue gas flap.

5. Method according to one of the preceding claims, wherein a superheater heat exchanger (10), an evaporator heat exchanger (11) and an economizer heat exchanger (12) are arranged in each heat recovery flow path (7.1, 7.2).

6. Method according to one of the preceding claims, wherein all heat exchangers arranged in the heat recovery flow paths (7.1, 7.2) are connected to one common boiler drum (13).

7. Method according to one of the preceding claims, wherein each heat recovery flow path (7.1, 7.2) comprises a door to enter the respective heat recovery flow path (7.1, 7.2).

8. Method according to one of the preceding claims, wherein the heat recovery steam generator (6) is oriented horizontally or vertically.

9. Method according to one of the preceding claims, wherein the plant comprises a combustion grate (3) with which the solid material and combusted solid material can be conveyed through the combustion chamber (2) from the combustion material inlet (1) to a slag outlet (4), wherein a primary air supply is arranged below the top of the combustion grate (3) and wherein at least one nozzle is arranged above the combustion grate (3) with which secondary air and/or an oxygen poor carrier gas can be provided.

## Patentansprüche

1. Verfahren zum Betrieb einer Verbrennungsanlage für Festmaterial, aufweisend
- einen Verbrennungsmaterialeinlass (1), durch den Festmaterial eingeführt werden kann,
- eine Brennkammer (2), in die das Festmaterial eingeführt wird und in der das Festmaterial verbrannt wird, wobei Rauchgase entstehen,
- mindestens einen Leerzug (5) stromabwärts der Brennkammer (2),
- einen Abhitzedampferzeuger (6) stromabwärts des Leerzugs (5) und
- eine Rauchgasreinigungseinrichtung stromabwärts des Abhitzedampferzeugers (6),
wobei
der Abhitzedampferzeuger (6) einen ersten Abhitzeströmungsweg (7.1) und mindestens einen zweiten Abhitzeströmungsweg (7.2) aufweist, wobei jeder Abhitzeströmungsweg (7.1, 7.2) den Leerzug (5) mit der Rauchgasreinigungseinrichtung verbindet, wobei mindestens eine Einströmungsabsperreinrichtung (8.1, 8.2) vorgesehen ist, so dass die Rauchgasströmung in jeden Abhitzeströmungsweg (7.1, 7.2) einzeln unterbrechbar ist, wobei das Verfahren folgende Schritte umfasst:
- Verbrennen von Festmaterial in der Brennkammer (2) mit einer ersten Rate,
- Reduzieren der Verbrennung des Festmaterials in der Brennkammer (2) auf eine zweite Rate,
- Schließen mindestens einer Einströmungsabsperreinrichtung (8.1) für den ersten Abhitzeströmungsweg (7.1), so dass das Einströmen von Rauchgas in den geschlossenen ersten Abhitzeströmungsweg (7.1) unterbrochen wird, wobei das Verfahren **gekennzeichnet ist durch**
- manuelles Reinigen und/oder manuelles Warten des geschlossenen ersten Abhitzeströmungswegs (7.1), während Festmaterial mit der zweiten Geschwindigkeit verbrannt wird und mindestens ein nicht geschlossener zweiter Abhitzeströmungsweg (7.2) von Rauchgas durchströmt wird.

2. Verfahren nach Anspruch 1, wobei für jeden Abhitzeströmungsweg eine Einströmungsabsperreinrichtung (8.1, 8.2) zwischen dem Leerzug (5) und dem jeweiligen Abhitzeströmungsweg (7.1, 7.2) angeordnet wird.

3. Verfahren nach Anspruch 2, wobei zwischen dem jeweiligen Abhitzeströmungsweg (7.1, 7.2) und der Rauchgasreinigungseinrichtung eine Einströmungsabsperreinrichtung (9) angeordnet ist.

4. Verfahren nach einem der vorhergehenden Ansprüche, wobei die Absperreinrichtung (8.1, 8.2, 9) als linear bewegliche Rauchgasblatt oder als schwenkbare Rauchgasklappe ausgebildet ist.

5. Verfahren nach einem der vorhergehenden Ansprüche, wobei in jedem Abhitzeströmungsweg (7.1, 7.2) ein Überhitzer-Wärmetauscher (10), ein Verdampfer-Wärmetauscher (11) und ein Economizer-Wärmetauscher (12) angeordnet sind.

6. Verfahren nach einem der vorhergehenden Ansprüche, wobei alle in den Abhitzeströmungswegen (7.1, 7.2) angeordneten Wärmetauscher an einen gemeinsamen Kessel (13) angeschlossen sind.

7. Verfahren nach einem der vorhergehenden Ansprüche, wobei jeder Abhitzeströmungsweg (7.1, 7.2) eine Tür zum Eintritt in den jeweiligen Abhitzeströmungsweg (7.1, 7.2) aufweist.

8. Verfahren nach einem der vorhergehenden Ansprüche, wobei der Abhitzedampferzeuger (6) horizontal oder vertikal ausgerichtet ist.

9. Verfahren nach einem der vorhergehenden Ansprüche, wobei die Anlage einen Verbrennungsrost (3) aufweist, mit dem das Festmaterial und verbranntes Festmaterial durch die Brennkammer (2) vom Brennmaterialeinlass (1) zu einem Schlackenauslass (4) gefördert werden kann, wobei unterhalb der Oberseite des Verbrennungsrostes (3) eine Primärluftzufuhr angeordnet ist und wobei oberhalb des Verbrennungsrostes (3) mindestens eine Düse angeordnet ist, mit der Sekundärluft und/oder ein sauerstoffarmes Trägergas bereitgestellt werden kann.

## Revendications

1. Procédé d'opération d'une installation d'incinération de matériaux solides, comprenant :
- une entrée de matériau de combustion (1) à travers laquelle un matériau solide doit être introduit,
- une chambre de combustion (2) dans laquelle le matériau solide est introduit et dans laquelle le matériau solide est brûlé, ce par quoi des gaz de combustion sont produits,
- au moins un passage vide (5) en aval de la chambre de combustion (2),
- un générateur de vapeur à récupération de chaleur (6) en aval du passage vide (5) et
- un dispositif de purification de gaz de combustion en aval du générateur de vapeur à récupération de chaleur (6),
dans lequel
le générateur de vapeur à récupération de chaleur (6) présente une première trajectoire d'écoulement à récupération de chaleur (7.1) et au moins une seconde trajectoire d'écoulement à récupération de chaleur (7.2), chaque trajectoire d'écoulement à récupération de chaleur (7.1, 7.2) raccordant le passage vide (5) au dispositif de purification de gaz de combustion, dans lequel au moins un dispositif de coupure d'arrivée (8.1, 8.2) est fourni, de manière à ce que l'écoulement de gaz de combustion dans chaque trajectoire d'écoulement à récupération de chaleur (7.1, 7.2) puisse être individuellement interrompu, le procédé comprenant les étapes suivantes :
- la combustion d'un matériau solide dans la chambre de combustion (2) à une première vitesse,
- la réduction de la combustion du matériau solide dans la chambre de combustion (2) à une seconde vitesse,
- la fermeture d'au moins un dispositif de coupure d'arrivée (8.1) pour la première trajectoire d'écoulement à récupération de chaleur (7.1), de telle sorte que l'écoulement de gaz de combustion dans la première trajectoire d'écoulement à récupération de chaleur (7.1) fermée soit interrompu,
le procédé **caractérisé par**
- le nettoyage manuel et/ou l'entretien manuel de la première trajectoire d'écoulement à récupération de chaleur (7.1) fermée, alors que le matériau solide est brûlé à la seconde vitesse et qu'au moins une seconde trajectoire d'écoulement à récupération de chaleur (7.2) non fermée est traversée par le gaz de combustion.

2. Procédé selon la revendication 1, dans lequel pour chaque trajectoire d'écoulement à récupération de chaleur un dispositif de coupure d'arrivée (8.1, 8.2) est disposé entre le passage vide (5) et la trajectoire d'écoulement à récupération de chaleur (7.1, 7.2) respective.

3. Procédé selon la revendication 2, dans lequel un dispositif de coupure de sortie (9) est disposé entre la trajectoire d'écoulement à récupération de chaleur (7.1, 7.2) respective et le dispositif de purification de gaz de combustion.

4. Procédé selon l'une quelconque des revendications précédentes, dans lequel le dispositif de coupure (8.1, 8.2, 9) est mis en œuvre sous la forme d'une lame de gaz de combustion linéairement mobile ou d'un volet de gaz de combustion pivotant.

5. Procédé selon l'une quelconque des revendications précédentes, dans lequel un échangeur de chaleur de surchauffeur (10), un échangeur de chaleur d'évaporateur (11) et un échangeur de chaleur d'économiseur (12) sont agencés dans chaque trajectoire d'écoulement à récupération de chaleur (7.1, 7.2)

6. Procédé selon l'une quelconque des revendications précédentes, dans lequel tous les échangeurs de chaleur agencés dans les trajectoires d'écoulement à récupération de chaleur (7.1, 7.2) sont raccordés à un ballon de chaudière (13) commun.

7. Procédé selon l'une quelconque des revendications précédentes, dans lequel chaque trajectoire d'écoulement à récupération de chaleur (7.1, 7.2) comprend une porte pour entrer dans la trajectoire d'écoulement à récupération de chaleur (7.1, 7.2) respective.

8. Procédé selon l'une quelconque des revendications précédentes, dans lequel le générateur de vapeur à récupération de chaleur (6) est orienté horizontalement ou verticalement.

9. Procédé selon l'une quelconque des revendications précédentes, dans lequel l'installation comprend une grille de combustion (3) avec laquelle le matériau solide et le matériau solide brûlé peuvent être acheminés à travers la chambre de combustion (2) depuis l'entrée de matériau de combustion (1) jusqu'à une sortie de laitier (4), dans lequel une alimentation en air primaire est agencée au-dessous de la partie supérieure de la grille de combustion (3) et dans lequel au moins une buse est agencée au-dessus de la grille de combustion (3) avec laquelle de l'air secondaire et/ou un gaz vecteur pauvre en oxygène peut être fourni.
